Europäisches Patentamt

European Patent Office

Office européen des brevets

(19)

(11) Veröffentlichungsnummer: **0 097 334**
**B1**

(12) **EUROPÄISCHE PATENTSCHRIFT**

(45) Veröffentlichungstag der Patentschrift:
03.05.89

(51) Int. Cl.⁴: **H 01 G 1/005, H 01 G 4/24**

(21) Anmeldenummer: **83105910.0**

(22) Anmeldetag: **16.06.83**

(54) Verfahren zum dauerhaften Aufbringen von metallischen Schichten auf eine Kunststoffolie und deren Verwendung in autoregenerativen Kondensatoren.

(30) Priorität: 18.06.82 DE 3222782
31.03.83 DE 3311951

(43) Veröffentlichungstag der Anmeldung:
04.01.84 Patentblatt 84/1

(45) Bekanntmachung des Hinweises auf die Patenterteilung:
03.05.89 Patentblatt 89/18

(84) Benannte Vertragsstaaten:
AT DE FR GB IT

(56) Entgegenhaltungen:
EP-A- 0 014 229
DE-B- 1 223 059

(73) Patentinhaber: Elektroschmelzwerk Kempten GmbH,
Herzog-Wilhelm-Strasse 16, D-8000 München 2 (DE)

(72) Erfinder: de Rudnay, André, Dr. Dipl. Chem., 16 Chemin de Renens Château de Valency, CH-1004 Lausanne (CH)

## Beschreibung

Die Erfindung bezieht sich auf ein Verfahren zum dauerhaften Aufbringen von metallischen Schichten auf eine Kunststoffolie, wie sie insbesondere zum Herstellen autoregenerativer Kondensatoren benötigt werden.

Es ist bekannt, als Dielektrikum in vorzugsweise selbst regenerierenden (autoregenerativen) Kondensatoren metallisierte Kunststoffolien, insbesondere aus Polypropylen, einzusetzen. Bei einem derartigen Aufbau von autoregenerativen Kunststoffolien-Kondensatoren, insbesondere bei Verwendung von Aluminium als metallischem Belag, treten kreisförmige, aus Oxiden bestehende Korrosionsschichten, sowie eine erhebliche Randkorrosion der metallischen Dünnschichten, z.B. der Dünnschichtenelektrode, auf. Ursprünglich wurde diese Korrosion der aus der Halbleitertechnik bekannten sog. Elektromigration zugeschrieben, und es wurden auch dieselben Vorbeugungsmethoden – Zulegierung geringer Mengen von Cu, Cr usw. – wie bei einer Elektromigration, die auf diesem Gebiet bereits mit Erfolg angewendet worden sind, vorgeschlagen.

Weitere Vorschläge zur Beseitigung der Korrosion betrafen den Einsatz von metallischen Mehrfachschichten, von nicht homogenen metallischen Schichten, von rauhen Trägerfolien usw. Keiner dieser Vorschläge konnte jedoch bisher das Fortschreiten der elektrochemischen Korrosion und die damit verbundenen Kapazitätsverluste genügend eindämmen, auch dann nicht, wenn die Kondensatoren mit Kunstharz gefüllt wurden.

Die Korrosion entsteht insbesondere in mit Aluminium metallisierten Polypropylenfolien-Kondensatoren der selbstregenerativen Art und tritt bei einer Wechselstrombelastung sehr viel stärker in Erscheinung als im Gleichstrombetrieb. Jedoch auch bei mit anderen Metallen beschichteten und aus anderen Kunststoffolien bestehenden selbstregenerativen Kondensatoren tritt die elektrochemische Korrosion auf, während selbstregenerative Papierkondensatoren von ihr kaum meßbar betroffen sind.

Aufgabe der Erfindung ist es, ein Verfahren zum dauerhaften Aufbringen von metallischen Schichten auf eine Kunststoffolie anzugeben, das ein späteres Auftreten von Korrosion in der bzw. den aufgebrachten Schichten unterbindet. Die metallischen Schichten selbst, die aus mindestens einem Metall bestehen, werden dabei vorzugsweise durch Aufdampfen in an sich bekannter Weise aufgebracht.

Die Aufgabe wird erfindungsgemäß dadurch gelöst, daß die Schicht oder die Schichten zur Verhinderung einer katalytischen Korrosion während des Aufbringens und/oder unmittelbar danach mit mindestens einem Katalysatorgift aus Verbindungen der chemischen Elemente ausgewählt aus den Gruppen 4a, 5a, 6a oder 7a des Periodensystems, wobei Wismut ausgeschlossen ist, in Berührung gebracht werden.

Aus der EP-A-0 014 229 ist ein selbstheilender elektrischer Kondensator mit einem aus Kunststoffolie bestehendem Dielektrikum und einer darauf aufmetallisierten Belagschicht aus beispielsweise Aluminium oder Zink bekannt, bei dem die Belagschicht zur Vermeidung eines feldstärkeabhängigen Schichtabbaus mindestens ein weiteres Metall aus der Gruppe Aluminium, Nickel, Magnesium, Titan, Hafnium, Beryllium oder Wismut in Mengen bis zu maximal 10 Gewichtsprozent enthält.

Derartige Belagschichten können aus einem legierten Ausgangsmaterial oder aus zwei Ausgangsstoffen hergestellt werden. Wesentlich ist hierbei, daß die Zusatzmetalle in die eigentliche Belagschicht eingebaut und darin homogen verteilt sind.

Gemäß dem Verfahren nach der Erfindung wird also durch die im einzelnen gekennzeichneten chemisch und/oder physikalisch wirkenden Maßnahmen jegliche katalytische Korrosion der aufgebrachten Schicht unterbunden. Dabei kann das Katalysatorgift entweder der Kunststoffmasse vor deren Verarbeitung zu Folien zugegeben oder auf die Folienoberfläche vor deren Beschichtung aufgebracht werden, wobei diese beiden Maßnahmen auch kombiniert werden können. Vorteilhaft wird das Katalysatorgift jedoch gleichzeitig mit der metallischen Beschichtung oder unmittelbar danach auf die Folienoberfläche aufgebracht.

Es wird angenommen, daß die elektrochemische Korrosion von auf Kunststoffolien niedergeschlagenen Elektroden bildenden Dünnschichten bei autoregenerativen Kondensatoren durch katalytische Vorgänge verursacht und dementsprechend durch Vorbeugen oder Unterbrechen der katalytischen Vorgänge mit Hilfe bestimmter, als «Katalysatorgift» bezeichneter Substanzen inhibiert bzw. in eine katalytisch nicht wirksame Oxidschicht umgewandelt werden kann.

Aufgrund der bisherigen Untersuchungen wird angenommen, daß der Korrosionsmechanismus bei der Metallisierung mit Aluminium in folgenden Schritten abläuft:

Die während der üblichen Corona-Behandlung in die Kunststoffolie eingedrungene, bzw. in dieser erzeugte, oder erst vor dem Metallisieren aufkondensierende Feuchtigkeit entweicht wieder mindestens teilweise während der Metallisierung der Folie und bildet mit den ersten aufkondensierenden Metallatomen eine gemischte, teilweise aus Hydroxid bestehende potentielle Katalysatorschicht, während der äußere Teil der aufkondensierten Metallschicht teils noch in der Vakuumanlage, teils aber erst nach Lufteinlaß, Feuchtigkeit (Wasserdampf) gettert und somit ebenfalls eine potentielle Katalysatorschicht bildet. Beide Seiten der Metallschicht bilden demzufolge bei Temperaturen oberhalb 60° und insbesonder oberhalb 80° eine Hydroxidschicht, beispielsweise Böhmit.

Calzinierte Hydroxide des Aluminiums ergeben bekanntlich bei Temperaturen von etwa 360°–450° katalytisch aktives, amphoteres $\gamma$-$Al_2O_3$, welches an den Korrosionsstellen des Kondensators tatsächlich aufgefunden wird. Da aber so hohe Temperaturen selbst in dem vorhandenen hohen elektrischen Feld nur an Fehlstellen und Kanten und dort auch nur kurzzeitig auftreten können, erfolgt die Umwandlung der Hydroxidschicht in die katalytisch aktive Oxidschicht nur an diesen Stellen, pflanzt sich aber von diesen Stellen ausgehend autokatalytisch fort, da von nun an ein Teil der zur Umwandlung erforderlichen Aktivierungsenergie vom Katalysator und zwar aller Wahrscheinlichkeit nach vom besonders wirksamen $Al_2O_3/Al$ inversen Mischkatalysator dargeboten wird. Ähnlich verläuft es auch bei der elektrochemischen Korrosion von Zink; doch hat bereits J.J. Courtet darauf hingewiesen, daß das um 50% höhere Ionisationspotential die bedeutend langsamere elektrochemische Korrosion von Zink erklären könnte.

Diese bisher nicht bekannte autokatalytische Ursache der elektrochemischen Korrosion erklärt auch die überraschende Tatsache, daß das an Luft viel leichter oxidierende Zink dem an Luft relativ korrosionsfesten Aluminium in autoregenerativen Kondensatoren bisher überlegen war und es ist Zweck der Erfindung, diesen bisherigen Nachteil der mit Al beschichteten autoregenerativen Kondensatoren mit Kunststoffolien zu beseitigen und ihnen den gebührenden Vorrang zu sichern.

Ein wirksames Eindämmen der elektrochemischen Korrosion wird erfindungsgemäß dadurch erreicht, daß das Entstehen und/oder Fortschreiten der katalytisch erzeugten elektrochemischen Korrosion mit Hilfe sog. Katalysatorgifte inhibiert wird. Hierzu können aus der Literatur bekannte Katalysatorgifte verwendet werden, worunter chemische Elemente und/oder deren Verbindungen ausgewählt aus den Gruppen 4a, 5a, 6a oder 7a des Periodensystems zu verstehen sind (CRC Handbook of Chemistry and Physics, Ed. 1980: Periodic Table of the Elements). Beispiele hierfür sind Silicium, Phosphor, Arsen, Schwefel, Selen, Tellur und Fluor oder Verbindungen hiervon. Auch kann anstelle des Mischkatalysators die bereitstehende oder erst im Laufe der katalytischen Korrosion sich bildende Oxidschicht vergiftet werden, indem sie beispielsweise durch Ionenimplantation von Wasserstoff oder auf eine beliebige andere Weise ihres amphoteren Charakters beraubt wird. Die Katalysatorgifte können außer Corona-Entladung (Ionenimplantation) auch mit anderen bekannten Mitteln, wie Tränken, Lackauftrag, Vakuumbeschichten, elektrostatisches Beschichten, Zugabe zu den die Kunststoffolie bildenden Rohstoffen usw. in die Kunststoffolie ein- oder auf die Kunststoffolie aufgebracht werden. Das Aufbringen kann auch während des Metallbeschichtens oder erst nachher erfolgen.

Für die Auswahl der Katalysatorgifte für den erfindungsgemäßen Zweck ist nur entscheidend, daß sie die dielektrischen Verluste nicht erhöhen und den autoregenerativen Prozeß des fertigen Kondensators nicht behindern.

Als Katalysatorgift für metallische Schichten aus Aluminium oder Zink hat sich die Verwendung von Siliciummonoxid als besonders wirksam erwiesen. Für metallische Schichten aus Aluminium ist außerdem die Verwendung von Magnesiumfluorid als Katalysatorgift vorteilhaft.

Man kann sich vorstellen, daß die Korrosionsfestigkeit von auf Kondensatorpapier aufgedampften Zn- und Al-Schichten ebenfalls sehr geringen Resten von Verunreinigungen, beispielsweise von der bei der Papierherstellung verwendeten Schwefelverbindungen, Siliciumverbindungen oder Halogenverbindungen zu verdanken ist. Somit wären nicht, wie bisher vermutet, Fehler der Kunststoffolien, sondern vielmehr ihre zu hohe Reinheit an der elektrochemischen Korrosion der von ihnen getragenen Dünnschichtenelektroden Schuld. Dadurch erklärt es sich auch, warum sog. Mischdielektrikum-Kondensatoren, bestehend aus beidseitig metallisiertem, feldfreiem Papierband als Elektrode und einer Polypropylen- oder Polycarbonat-Folie als Dielektrikum geringere Korrosion aufweisen, als Kondensatoren mit metallisierten Kunststoffolien, da die aus dem Papierlack herausdiffundierenden, ursprünglich im Papier enthaltenen Katalysatorgifte die eine Seite der dünnen Metallschicht passivieren, und die Korrosion nur von der anderen Seite her angreifen kann. Kommt auch die andere Seite mit Papier, bzw. mit dem auf das Papier aufgebrachten Lack in Berührung, so verschwindet jedes Anzeichen einer elektrochemischen Korrosion, die Kapazität des Kondensators nimmt sogar in manchen Fällen – wohl infolge der elektrostriktiven Papierverdichtung – im Laufe des Prüfvorganges zu. Dieser Passivierungseffekt steht im Einklang mit der bekannten Tatsache, daß die Katalyse eindeutig eine reine Oberflächeneigenschaft ist, denn Chemisorption kann natürlich nur an der Oberfläche erfolgen. Dementsprechend genügt es für den erfindungsgemäßen Zweck in den meisten Fällen, wenn der Kunststoffolie weniger als 1% eines diffusionsfreudigen Katalysatorgiftes zugegeben oder ihre Oberfläche mit einem solchen dotiert wird: das Gift muß nur die korrosionsaktiven Stellen der beiden Oberflächen der Dünnschichtenelektrode unschädlich machen. Wichtig ist, daß das Gift an den Folienoberflächen wirksam wird, was bei den den Polypropylenfolien zugegebenen Ziegler-Natta Titan-Halogenverbindungen nicht der Fall ist. Bekannte Verfahren der Oberflächenbehandlung, wie beispielsweise das Beschießen der Oberfläche mit energiereichen Teilchen können hingegen mit Erfolg zum Vergiften mit herangezogen werden, falls die Teilchen genügend Energie zum Stören des autokatalytischen Vorganges, bzw. zum Überführen der amphoteren Oxidschicht in eine höhere neutrale Modifikation, oder noch besser Überführen der ursprünglichen niederen Oxidschicht in eine höhere neutrale oder dichtere Modifikation, besitzen. Dabei kommt es nicht darauf an, daß die Teilchen der weiter oben angeführten Auswahl von Katalysatorgiften angehören, es können sogar energiereiche Elementarteilchen genügender Energie sein. So kann beispielsweise die Kunststoffolie während der Metallisierung in an und für sich bekannter Weise mit Edelgasionen beschossen und auf diese Weise das Entstehen von Hydroxid, unter gleichzeitigem Sichern einer einwandfreien Haftung der Metallschicht, verhindert werden, ohne daß die von der Folie aufgenommenen Edelgasionen im weiteren Verlauf das einwandfreie Funktionieren des Kondensators stören. Weiterhin kann die aufkondensierte Metallschicht mit beispielsweise energiereichen Photonen bestrahlt werden, um mindestens den äußersten Teil der aufgewachsenen Oxidschicht in eine der Hydratation nicht mehr zugängliche Oxidschicht umzuwandeln. Zahlreiche andere Methoden des Beschusses mit energiereichen Teilchen können angewendet werden, um das gemäß Erfindung notwendige Vergiften der durch Autokatalyse verursachten elektrochemischen Korrosion zu erwirken.

In jedem Fall wird durch die erfindungsgemäß anzuwendenden Maßnahmen eine beschichtete Kunststoffolie zur Verwendung bei Kondensatoren geschaffen, die mit einfachen Mitteln korrosionsfest gemacht ist, so daß die Kondensatoren auch auf den ihnen bisher aus Korrosionsgründen verschlossenen Gebieten eingesetzt werden können.

**Patentansprüche**

1. Verfahren zum dauerhaften Aufbringen, vorzugsweise durch Aufdampfen, von metallischen Schichten auf eine Kunststoffolie, insbesondere zum Herstellen autoregenerativer Kondensatoren, dadurch gekennzeichnet, daß die Schicht oder die Schichten zur Verhinderung einer katalytischen Korrosion, während des Aufbringens und/oder unmittelbar danach mit mindestens einem Katalysatorgift aus Verbindungen der chemischen Elemente ausgewählt aus den Gruppen 4a, 5a, 6a oder 7a des Periodensystems, wobei Wismut ausgeschlossen ist, in Berührung gebracht werden.

2. Verfahren nach Anspruch 1, dadurch gekennzeichnet, daß das Katalysatorgift der Kunststoffmasse vor deren Verarbeitung zu Folien zugegeben wird.

3. Verfahren nach Anspruch 1, dadurch gekennzeichnet, daß das Katalysatorgift gleichzeitig mit der metallischen Beschichtung oder unmittelbar danach auf die Folienoberfläche aufgebracht wird.

4. Verfahren nach Anspruch 1, dadurch gekennzeichnet, daß Siliciummonoxid als Katalysatorgift für metallische Schichten aus Aluminium oder Zink verwendet wird.

5. Verfahren nach Anspruch 1, dadurch gekennzeichnet, daß Magnesiumfluorid als Katalysatorgift für metallische Schichten aus Aluminium verwendet wird.

6. Metallbeschichtete Kunststoffolie, die nach dem Verfahren gemäß Anspruch 1 hergestellt worden ist.

7. Verwendung der metallbeschichteten Kunststoffolie gemäß Anspruch 6 als Dielektrikum für autoregenerative Kondensatoren.

**Claims**

1. Process for durable application, preferably by vapour deposition, of metallic coatings onto a plastic foil, in particular for the production of autoregenerative capacitors, characterized in that, in order to prevent catalytic corrosion, the coating or coatings are brought into contact with at least one catalyst poison comprising compounds of the chemical elements selected from groups 4a, 5a, 6a or 7a of the Periodic Table, with the exclusion of bismuth, during application or directly thereafter.

2. Process according to Claim 1, characterized in that the catalyst poison is added to the plastic composition before processing thereof to foils.

3. Process according to claim 1, characterized in that the catalyst poison is applied to the foil surface at the same time as the metallic coating or directly thereafter.

4. Process according to Claim 1, characterized in that the catalyst poison used for metallic coatings comprising aluminium or zinc is silicon monoxide.

5. Process according to Claim 1, characterized in that the catalyst poison used for metallic coatings comprising aluminium is magnesium fluoride.

6. Metal-coated plastic foil produced by the process according to Claim 1.

7. Use fo the metal-coated plastic foil according to Claim 6 as a dielectric for autoregenerative capacitors.

**Revendications**

1. Procédé pour appliquer de manière durable, avantageusement par dépôt en phase vapeur, des couches métalliques sur une feuille de matière plastique, en particulier pour fabriquer des condenseurs auto-régénérants, procédé caractérisé en ce que, pour empêcher une corrosion catalytique, on met la couche ou les couches en contact, pendant l'application et/ou immédiatement après cette application, avec au moins un poison de catalyseur constitué par des composés des éléments chimiques choisis parmi les groupes IVa, Va, VIa ou VIIa du Tableau Périodique des Eléments, à l'exclusion du bismuth.

2. Procédé selon la revendication 1, caractérisé en ce que le poison du catalyseur est ajouté à la composition ou masse de matière plastique avant sa transformation en des feuilles.

3. Procédé selon la revendication 1, caractérisé en ce que le poison du catalyseur est appliqué en même temps que le revêtement métallique, ou, immédiatement après ce revêtement, à la surface de la feuille de matière plastique.

4. Procédé selon la revendication 1, caractérisé en ce qu'on utilise du monoxyde de silicium comme poison de catalyseur pour des couches métalliques en aluminium ou en zinc.

5. Procédé selon la revendication 1, caractérisé en ce qu'on utilise du fluorure de magnésium comme poison de catalyseur pour des couches métalliques en aluminium.

6. Feuille de matière plastique revêtue d'un métal, qui a été produite par le procédé selon la revendication 1.

7. Utilisation des feuilles de matière plastique, à revêtement de métal selon la revendication 6, comme diélectrique pour des condensateurs auto-régénérants.